# EUROPEAN PATENT SPECIFICATION

(11) **EP 1 625 579 B1**
(45) Date of publication and mention of the grant of the patent: **02.11.2006**
(21) Application number: 04733360.4
(22) Date of filing: 17.05.2004
(51) Int. Cl.: G11B 7/24, G11B 7/26, B01J 23/56

(54) **METHOD FOR MAKING A NANO-PARTICULATE MEDIUM**
VERFAHREN ZUR HERSTELLUNG EINES NANO-TEILCHEN MEDIUMS
PROCEDE DE FABRICATION D'UN SUPPORT NANOPARTICULAIRE

(30) Priority: 20.05.2003 GB 0311568
(43) Date of publication of application: 15.02.2006
(73) Proprietor: COVENTRY UNIVERSITY, Coventry CV1 5FB (GB)
(72) Inventor: NEWMAN, David Michael, Kenn, Exeter EX6 7UU (GB); WEARS, Mavis Lesley, Exeter EX2 8GW (GB); JOLLIE, Michael Ian, Solihull, West Midland B92 7QN (GB)
(74) Representative: Jones, William
(86) International application number: PCT/GB2004/002118
(87) International publication number: WO 2004/105007

(56) References cited:
- EP-A- 0 125 536
- EP-A- 0 549 246
- US-A- 3 759 823

## Description

### Field of the Invention

The invention relates to a method for making a nano-particulate medium and to a method for making a recordable magnetic medium involving the use of such a method.

### State of the Art

The relentless demand for increased capacity on all data storage systems is driving continual increases in the areal density at which data must be stored on the recording surface. In magnetic recording the thickness of the storage medium is limited by the available write field so that any increase in areal density at a given media thickness must be accompanied by a corresponding reduction in the physical volume available to store 'one bit' of information. At current magnetic recording densities, a single data bit is encoded as the presence or absence of a transition from one magnetic domain to the next on a scale where each domain contains very many particles or grains.

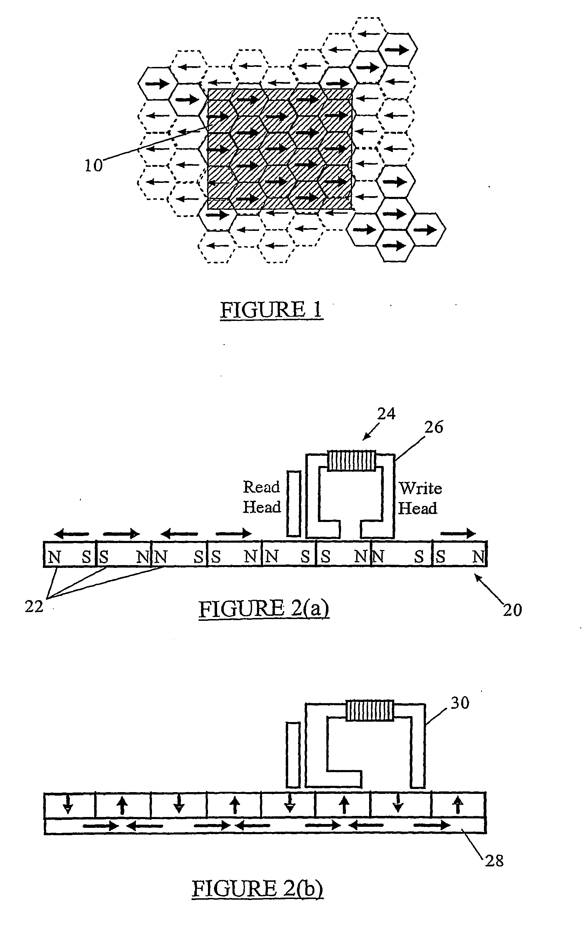

These groups of grains, which form a domain, switch their magnetisation collectively, creating uncertainty in the final location of the transition. The useful information is stored in the central part of the bit. At the boundaries of each bit the poles of the magnetic bits directly oppose one another and these opposing magnets tend to destabilise each other and produce ill-defined transition regions. This adds to the noise. In order to enhance the signal-to-noise level it is desirable to ensure that the number of grains per bit is much higher than the number of bits at the boundaries. This requires that each bit occupy an area of currently many hundreds or thousands of grains. This is shown in simplified form in Figure 1, in which the central region 10 can be seen to consist of a relatively large number of grains having the same magnetic orientation, this then constituting a single bit.

If the recording density is to be increased, the domain size must become smaller and therefore the scale of the individual magnetic particles (grains) that comprise the domain must accordingly be reduced to maintain the number of particles per domain constant in order not to suffer a degradation in the signal-to-noise ratio.

Unfortunately recording densities are now such that further decreases in particle size will soon be blocked by the 'superparamagnetic limit'. This is the point at which the thermal energy of the medium's environment becomes comparable with the anisotropy energy of the magnetic particle. When the volume (V) of a particle is reduced to the superparamagnetic limit the medium becomes essentially non-ferromagnetic and loses all ability as a recording medium. Moreover long before the superparamagnetic limit is actually reached, the probability of spontaneous magnetisation reversal in very fine grained material becomes significant and the integrity of recorded data is extremely reduced at typical hard-drive operating temperatures. The acceptable minimum lifetime (standard) for recorded data is currently ten years. To maintain the long-term integrity of recorded data when developing media capable of supporting areal densities of around 1 x 10¹² bits per square inch (1 Tera bits per square inch - the industry's goal by 2010), it is necessary to devise procedures for extending the superparamagnetic limit.

Under the constraint imposed by the superparamagnetic limit, a desirable recording medium is conceived as one consisting of an array of identically sized (mono-disperse), single-domain particles of a material possessing high intrinsic magnetic anisotropy and sufficiently dispersed so that any mutual magnetic interaction is minimised.

The difficulties of finding commercially viable techniques for the physical realisation of such a medium are manifold and challenging. The routes in this direction currently being explored by the recording industry are:
(i) patterned media produced using lithographic and or etching processes, and
(ii) self-assembling particulate arrays produced via complex chemical or biological routes.

Both of these are incompatible with current magnetic hard-disk production techniques. Route (i) is limited in that it cannot within the foreseeable future produce media structured at the 2.5nm to 12nm required, nor can it produce large areas of media cost-effectively. Route (ii), although proven to produce mono-disperse particles of the size required, struggles to achieve uniformity over any significantly useful recording area.

A second factor to be taken into account in the development of a magnetic recording medium is the desirability of producing a so-called "perpendicular" recording medium. There are two main recording techniques commonly employed and these are illustrated in Figures 2(a) and 2(b).

In Figure 2(a) a so-called "longitudinal" recording arrangement is shown comprising a recording medium 20 composed of a number of magnetic domains 22 and a read/write head 24. The domains can be seen to lie horizontally on the diagram, or "longitudinally" along the major axis of the recording medium and in addition the inductive write head is a double-pole magnet 26. By contrast, one form of a known perpendicular recording system comprises for a recording medium a series of domains which lie vertically (see Figure 2(b)) and face into or out of a soft magnetic underlayer 28. This perpendicular arrangement also employs a single-pole write head 30. It is generally accepted that the limit of capacity of a longitudinal recording system is around 100-200 Gb/in², whereas the limit with the perpendicular system is held to be an order of magnitude greater.

It can therefore be seen that it would be desirable to provide a magnetic recording medium which contained mono-disperse, single-domain particles having a high perpendicular anisotropy.

### Scope of the Invention

The Scope of the Invention is defined in the numbered claims which follow the description.

### Brief Description of the Drawings

An embodiment of the invention will now be described, by way of example only, with reference to the drawings, of which:
Figure 1 is a simplified diagram of a domain structure in a prior-art recording medium;
Figure 2 is a perspective view of two types of recording arrangement: longitudinal (Figure 2a) and perpendicular (Figure 2b);
Figures 3(a) and 3(b) show in front and plan view, respectively, equipment which may be used to carry out the method according to the invention;
Figure 4 is a sectional view through a substrate on which are deposited sputtered layers prior to heat treatment in a subsequent rapid thermal processing operation;
Figure 5 is a comparison between the performance of a known conventional perpendicular medium and that of a recording medium manufactured under a method according to the present invention; and
Figures 6 to 8 illustrate further developments/details.

### Detailed Description of an Embodiment of the Invention

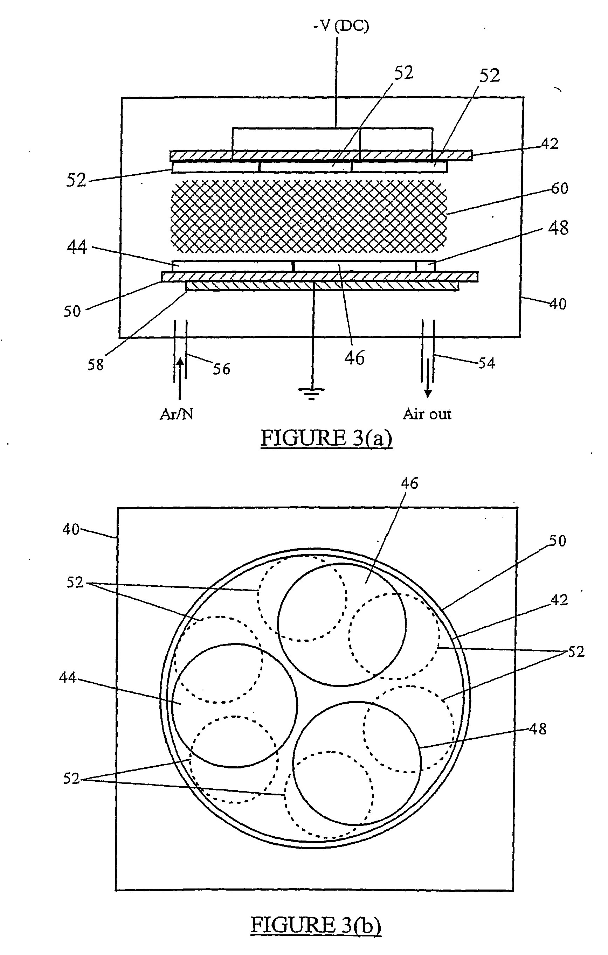

A method according to the invention for producing a magnetic recording medium involves the use of apparatus such as that illustrated in Figures 3(a) and 3(b).

In Figures 3(a) and 3(b), which are front and plan views, respectively, a sputtering chamber 40 contains at one end, in conventional fashion, a negative electrode 42 in contact with three targets 44, 46 and 48 composed of platinum, cobalt and silicon nitride, respectively. At the other end of the chamber, again in known fashion, a positive electrode 50 is provided, on which a number of substrates 52 are placed. The substrates are preferably made of a high-temperature glass. The targets and substrates having been placed inside the chamber, the chamber is evacuated through a port 54 and an inert gas, which preferably consists of an argon/nitrogen mixture, is introduced into the chamber through a second port 56. A high voltage is then fed to the electrodes 42, 50, which sets up a plasma (glow discharge) 60 in the intervening space. The plasma consists of positive ions of the inert gas. The ions are accelerated towards the cathode and knock atoms off of the targets, these atoms then impacting the anode and adhering to the substrates. This is a sputter 'up' process in that the substrates are above the targets. Such a process is advantageous when preparing recording media as particles cannot fall off the targets and contaminate the media being formed.

Both DC and RF voltages are used in the spluttering process. The platinum and cobalt are DC spluttered but the silicon nitride is RF sputtered as it is an insulator. Cobalt nitride is produced by 'reactive' sputtering i.e. cobalt nitride is formed when the cobalt reacts with the nitrogen in the sputtering.

During the sputtering process a heater 58 may assist the deposition process by heating the substrates and the electrode 50 is made to rotate by some suitable means. This rotation ensures that all of the substrates are coated equally by the target atoms.

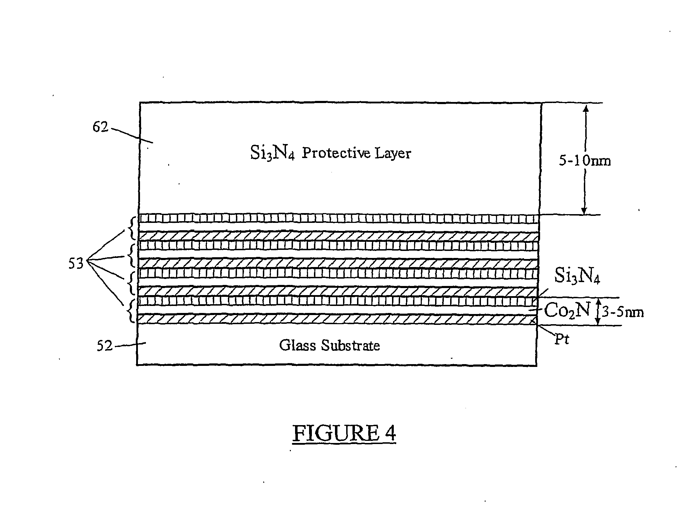

As each substrate moves round, it picks up atoms from each of the targets in turn, which will therefore normally form in discrete layers on the substrate. The thickness of the layers will depend largely on the speed of rotation of the substrate electrode and the magnitude of the power supplied to the targets, and indeed, if the rotational speed is high enough (and/or the target power is suitably low), the layers will be so thin as to amount to one homogenous layer, once sputtering is completed. A situation in which discrete layers are formed is shown in Figure 4. Here the glass substrate 52 can be seen to be coated with a series of tri-layer coatings 53 composed of platinum (Pt), cobalt nitride (Co₂N) and silicon nitride (Si₃N₄). (The order of these constituent parts is arbitrary.) The number of such composite layers is determined by the number of passes of the substrate past each of the targets. In the preferred realisation of the present method the total thickness of each composite layer is between approximately 3nm and 5nm. Although the three constituent layers forming each composite layers are shown to be of identical thickness, in practice they may well be of different thicknesses. This is discussed in more detail later.

Once the desired number of coatings has been sputtered on and to the desired depth, both the platinum and the cobalt targets are switched off (i.e. the negative high-voltage feed to them is interrupted), leaving only the silicon nitride target still energised. This then continues to apply a sputtered layer of silicon nitride to the topmost layer of the substrates, this new layer constituting an outermost rugged protective layer 62, which is particularly useful where the structure thus created is to be employed as a recording medium in conjunction with a read/write head.

A preferred thickness of the protective layer 62 is between approximately 5nm and 10nm.

The sputtering process completed, the substrates are removed from the chamber 40 and inserted into a heating chamber (not shown), where they are subjected to a rapid thermal processing (RTP) phase, in which they are very rapidly heated in a vacuum by an optical heating process to a temperature of between 500 and 650°C which is maintained for an interval of between 30 and 60 seconds, after which the optical heat source is removed and the sample allowed to cool naturally in vacuum.

The cobalt nitride is unstable and the actual target temperature is chosen such that the cobalt nitride disassociates, releasing nitrogen that escapes by diffusion and is pumped away. The freed cobalt is left in a dispersed, very active quasi-vapour state and readily alloys with the similarly dispersed platinum which, like the silicon nitride, is unaffected at the elevated temperatures employed. This process occurs whether sputtering has produced discrete layers originally or one large homogeneous layer, as mentioned as a possibility above.

The composition of this material - i.e. the relative thicknesses of the three constituent layers - is chosen so that, on cooling, the density of the PtCo alloy forming throughout the resulting silicon nitride matrix is insufficient for its formation as a single layer, but is "condensed" into a dispersion of substantially identically sized particles having volumes almost optimally spaced between the single-domain and superparamagnetic limits. More precisely, the particles should at their largest extreme be small enough to be in the single-domain state, where their only magnetisation-reversal process is by coherent rotation against the anisotropy field. If they are larger than this, reversal becomes easier as domain growth processes become possible. At the lower extreme of particle size, the volume of each particle should be such that its total magnetic energy is considerably larger than the thermal energy of its surroundings, otherwise it will become superparamagnetic instead of ferromagnetic and incapable of storing information.

It should be noted that, because of the presence of the SiN/Si₃N₄, the particles do not form a single layer (a "mono-layer") on the substrate, but are separated into a plurality of layers, so that a magnetic bit is still formed by a number of particles, as is currently the case in the prior art. This has the advantage of giving a larger readout signal and hence, as with the known methods, a larger S/N ratio.

The relative thicknesses of the Pt, CoN/Co₂N and SiN/Si₃N₄ layers can, then, be readily established by experiment and are produced by applying different DC voltages to the three targets 44, 46, 48 in the chamber 40 (see Figures 3(a) and 3(b)).

In a preferred realisation of the invention, the temperature attained during the RTP phase is such as not only to ensure disassociation of the CoN/CO₂N, but to ensure that the PtCo alloy formed is in its crystalline form. This is desirable, since the anisotropy of the alloy produced in this particular crystalline form is higher than with other crystalline forms. The temperature at which crystallisation in this form takes place is higher than that at which the CoN/Co₂N disassociates, hence the actual temperature to which the substrate is taken during the RTP phase is the higher of the two temperatures.

The RTP temperatures cited above are those at which the necessary disassociation of the nitride of the magnetic element and, preferably also, the desirable crystalline form of the resulting alloy take place. These temperatures in any evaluation of the inventive process may or may not relate to the actual temperature of the substrate in question. In testing the present method, for instance, the inventors measured not the temperature being reached by the substrate in question, but that of a similar, but unprocessed, substrate placed alongside the substrate in question. Thus it is possible that the actual substrate temperature(s) at which the desired effect(s) are observed are different from the temperatures being measured. This, however, is immaterial, as long as the measured temperatures are accurately correlated with the occurrence of these desired effects. A similar consideration applies in respect of the use of different compositions. Samples which are made with deliberately different compositions (e.g. in which the ratio of the amount of CoN/Co₂N to the amount of Pt is different) will have different optical absorptions. They will therefore take up energy during the optically driven thermal-processing phase with different efficiencies. Consequently, two different samples processed at the same measured temperatures will reach different true temperatures and care must be taken to ensure that each sample, whatever its composition, is raised to a temperature sufficient for the required disassociation, and preferably also the required crystallisation, to occur.

A very considerable degree of control over the properties of the recording medium and the resultant recording characteristics is afforded by the precise manipulation of the deposition parameters (including target voltage, substrate rotation rate, etc) during sputtering and the time-temperature profiles employed during the RTP phase.

The RTP temperature determines not only whether disassociation and correct crystallisation takes place but also whether the final product has a higher or lower coercivity. The initial pt, Co₂N and Si₃N ratios determine the final characteristics of the resulting medium.

Although in the process described above the sputtering and RTP phases have been assumed to take place in two distinct locations, they may be carried out in a single piece of apparatus. This may take the form of a conventional sputtering chamber which has been modified by the inclusion of an appropriate heating means for heating the substrates up to the required temperature range.

In addition, whereas the described process has created particles made of PtCo, the present invention also envisages the use of iron nitride (FeN) in place of cobalt nitride, which would then result in the creation of PtFe particles instead of PtCo, though it would be necessary to take into account a possible difference in target temperature at which the FeN would disassociate compared with the CoN/Co₂N. Another substitution that could be made is that of diamond-like carbon for the silicon nitride of the final protective layer. Diamond-like carbon is the industry's favourite interfacial layer for recording heads due to its extreme durability and ruggedness and may therefore have advantages over the use of SiN/Si₃N₄ for this function. It may well, however, have to be applied to the treated substrate in a separate chamber (this is in contrast to the SiN/Si₃N₄ protective layer, which is applied in the same chamber as the CoN/Co₂N₄ and Pt), and this would considerably complicate the production cycle.

Typical changes needed in order to create a medium with much better characteristics include the substrate and protective overlayer being optimised to low flying recording heads and the thickness of medium optimised to maximise read out signal and a soft appropriate underlayer added to the production process.

The production routine described above uses plant and processes already in common use in the hard-disk recording industry and delivers a near mono-disperse medium uniformly across large areas. The medium has a high perpendicular anisotropy and has been produced during tests with high remanence and coercivities in the range 2.5kOe to >16kOe. In initial recording experiments, media having coercivities at the lower end of this range have already been demonstrated to support perpendicular recording at densities approaching that achieved by the most advanced current conventional media.

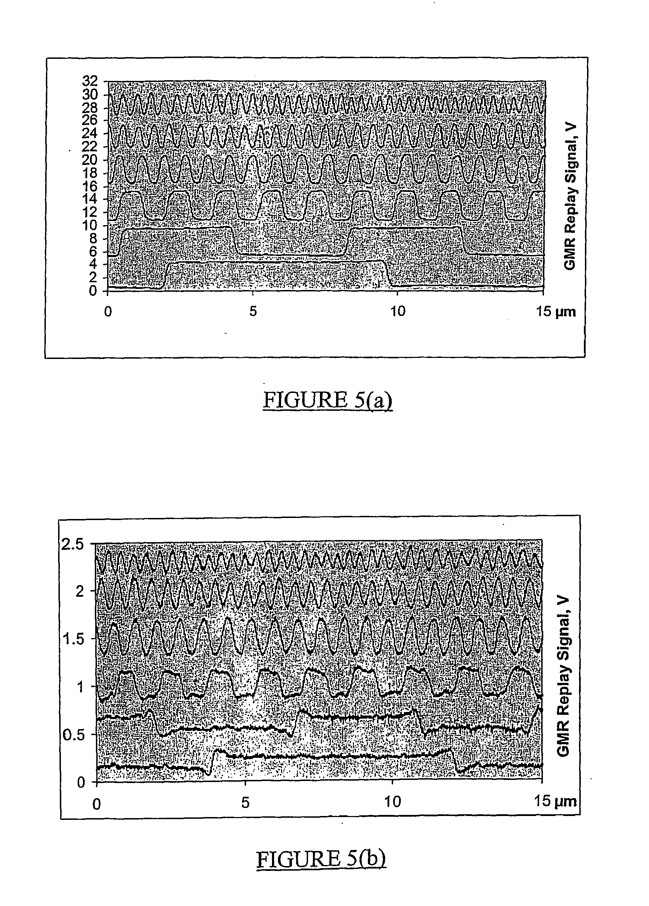

This is demonstrated by comparing Figure 5(a) with Figure 5(b). These recording experiments were conducted using the stray field of longitudinal recording heads not optimised perpendicular heads. Figures 5 illustrate the performance of a recording medium made in accordance with the present invention, but employing the relatively low RTP target temperature of 500°C and having as a consequence a relatively low coercivity allowing the ready writing of data to the medium, even without the use of a soft magnetic underlayer often employed with perpendicular recording systems (cf. Figure 2(b)). It is worth noting that the substrate used in this test was not specially prepared in any way, e.g. by special cleaning and smoothing. It is also worth noting that the substrate used in this test was prepared with no Si₃N₄ separator layers only an overcoat. The different traces correspond to different data rates ranging from 3.2kfci (3200 flux changes per inch) to 128kfci. The latter corresponds to a data density of approximately 300 Mb/sq. inch. Figures 5, on the other hand, shows the performance of a known continuous thin-film multi-layer medium made using known techniques and with readings taken using a perpendicular recording system with soft magnetic underlayer to aid writability. The substrate used here had been specially cleaned and smoothed, which has the effect of enhancing the performance.

As can be seen, the performances of the two systems are very comparable. The main difference, however, is that, although the known system is working at the upper limit of its capacity, the purely experimental system illustrated is at the lower end of its capability. Greater performance can be enjoyed by raising the sputtered substrate to a higher temperature during the RTP phase, so as to give rise to smaller particles of higher coercivity and anisotropy, which will enable much greater quantities of data to be written to the medium - up to 1 Tb per square inch and beyond. In that case, however, it will be necessary to employ local optical heating of the medium in order to be able to perform the writing operation.

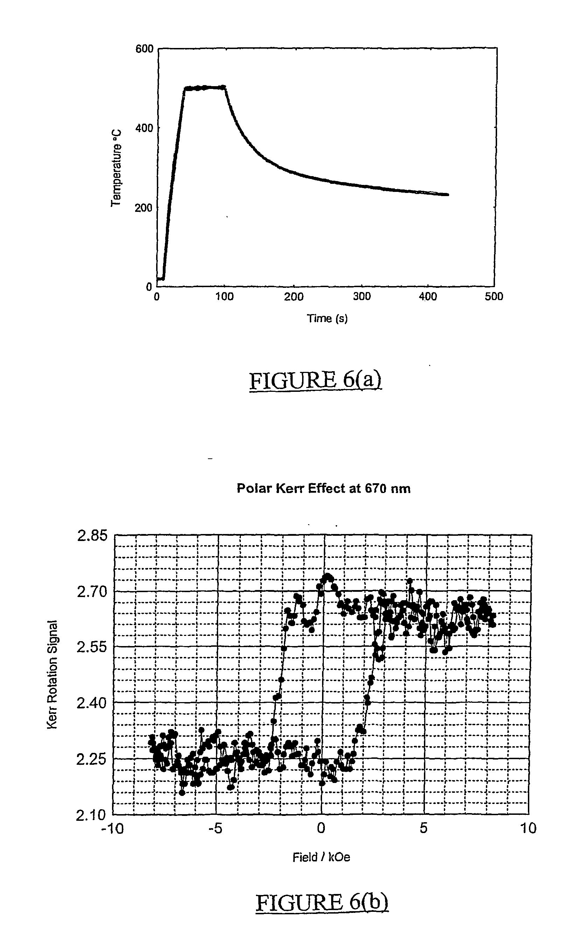

Referring now to Figures 6 (a) and 6 (b), the material compared in the writing experiments with the IBM material consists only of Cobalt nitride and Platinum with a 10 nm over-layer of silicon nitride. There is no silicon nitride filling or separator. The sample before RTP consisted of 72 'layers' of cobalt nitride and Platinum each layer being 0.091nm thick respectively. Note these are not layers in accepted sense since they are sub-atomic thickness. Figure 6 (a) shows the RTP heating profile of temperature as a function of time. It is seen that the sample is kept at the plateau 'temperature' for 60 seconds. Figure 6(b) shows the saturated magnetic hysteresis loop of this material in the perpendicular direction as obtained using Polar Kerr effect.

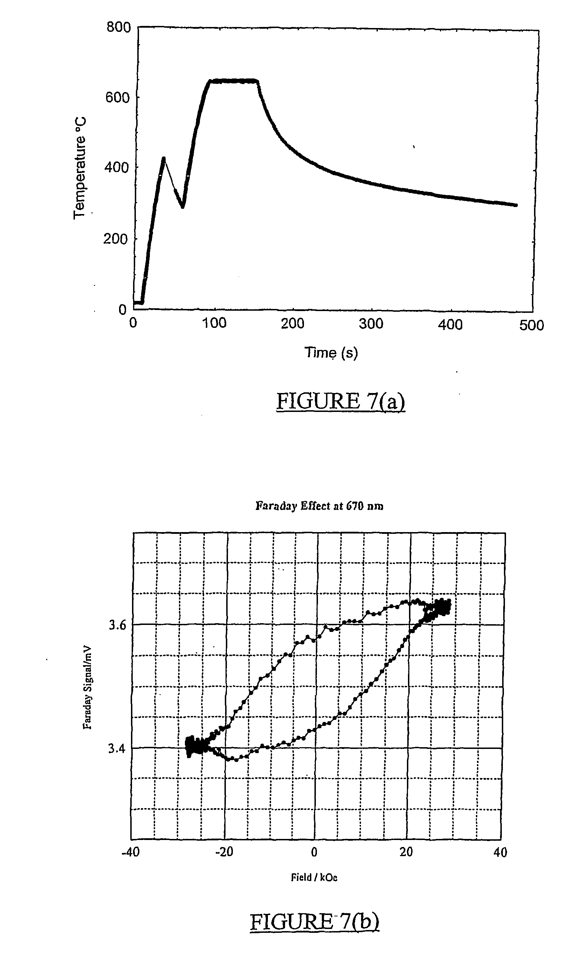

As a second example of how we can vary characteristics consider a film deposited in the same 4 minute time period as the above but now with silicon nitride sputtered at the same time. The sample is composed of 108 'layers' of Cobalt nitride, Platinum and Silicon nitride. The layer thickness are 0.091nm, 0.078nm and 0.014nm respectively. Again the sample is over-coated by 10nm silicon , nitride. This sample is processed at a plateau temperature using the RTP profile of Figure 7(a).

This produces the magnetic hysteresis loop in the perpendicular direction shown in Figure 7(b) now obtained using the Faraday effect in an attempt to increase the field available in the instrumentation. It is seen that this is a minor loop that is not saturated in the field available. We are still endeavouring to produce a saturated loop of this material which we expect to be square with a coercivity of around 20kOe. This material should support a very high recording density with good stability.

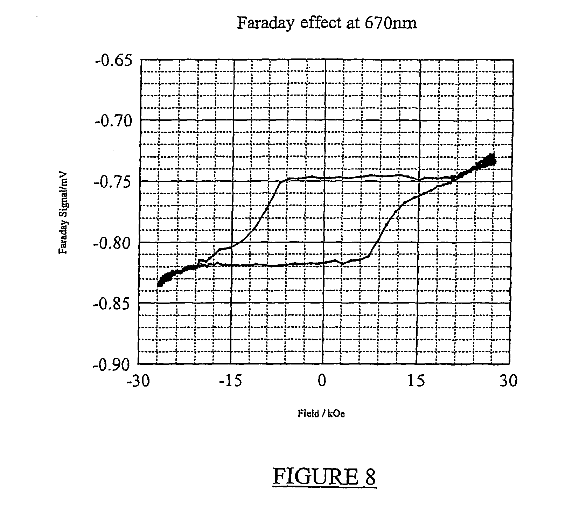

Figure 8 is an example of a Faraday loop of the same material as in previous graph but subjected to RTP at 500°C instead of 650°C. As can be seen the loop is much squarer saturates at approximately 20kOe and has a coercivity of approximately 10kOe.

While the present manufacturing process is mainly directed to the production of a recording medium, it may also be put to use in other applications. One such is a catalytic process involving alloys such as PtCo. The advantage of the present method of manufacturing the mono-disperse, uniform distribution of PtCo particles in a matrix is that, since the particles themselves are so small and substantially spherical, the area-to-volume ratio of the particles is high, which can result in a superior catalysis performance, since there is then relatively more surface area of the PtCo particles available to perform the catalytic process. When used in a catalytic application, the nano-particulate medium made in accordance with the present invention will normally not require the protective layer described earlier.

In summary, when Pt is added CoPt alloy particles are formed and may be developed to exhibit the full anisotropy of that alloy expressed perpendicularly.

The techniques described herein relate to HARM (Heat Assisted Recordable Magnetic) media and can result in forming perpendicular HARM media with the potential to store in excess of 1Tb/sq. in.

Whilst the magnetic element is preferably cobalt, in principle sputter from a cobalt nitride target could also be used.

## Claims

1. A method for making a nano-particulate medium, comprising:
(a) sputtering onto a substrate platinum, silicon nitride and a nitride of a magnetic element which will disassociate under thermal processing in a vacuum, the sputtering being such as to produce predetermined relative quantities of the platinum, silicon nitride and the nitride of a magnetic element;
(b) subjecting the thus treated substrate to a rapid thermal-processing operation in a vacuum, in which the substrate is raised over a given period of time to a temperature at which the nitride of the magnetic element disassociates, releasing nitrogen by diffusion and leaving behind the magnetic element, and
(c) allowing the substrate to cool,
whereby the magnetic element alloys with the platinum to form particles which are substantially mono-disperse and substantially uniformly distributed in the silicon nitride.

2. Method as claimed in Claim 1, wherein cobalt nitride is used for the nitride of a magnetic element and the formed particles are PtCo particles.

3. Method as claimed in Claim 2, wherein the rapid thermal-processing operation heats the substrate from ambient temperature to >500°C over a period of between 30 and 60 seconds.

4. Method as claimed in Claim 2 or Claim 3, wherein the temperature reached during step (b) is such as to ensure the formation of PtCo particles in a tetragonal crystalline form.

5. Method as claimed in Claim 4, wherein the rapid thermal-processing operation heats the substrate from ambient temperature to between 600 and 650°C over a period of between 30 and 60 seconds.

6. A method for making a perpendicular heat assisted recordable magnetic medium, comprising a method for making a nano-particulate medium as claimed in any one of the preceding claims and further comprising the step of providing a protective outermost layer.

7. Method as claimed in Claim 6, wherein the protective outermost layer is a silicon nitride layer produced by allowing the sputtering of the silicon nitride in step (a) to continue after the sputtering of the platinum and cobalt nitride has ceased.

8. Method as claimed in Claim 7, wherein said continued sputtering is sufficient to produce a protective layer of between approximately 5nm and 10nm thickness.

9. A catalytic apparatus, wherein the catalyst comprises a PtCo nano-particulate medium made in accordance with a method as claimed in any one of Claims 2 to 5.

## Patentansprüche

1. Ein Verfahren zum Herstellen eines nanopartikulären Mediums, bestehend aus:
(a) dem Aufstäuben von Platin, Siliciumnitrid und einem Nitrid eines magnetischen Elements, das bei thermischer Bearbeitung in einem Vakuum dissoziiert, auf ein Substrat, wobei das Aufstäuben in einer Weise erfolgt, dass ein vorgegebenes Mengenverhältnis zwischen Platin, Siliciumnitrid und einem Nitrid eines magnetischen Elements erreicht wird;
(b) einer schnellen thermischen Bearbeitung des Substrats in einem Vakuum, wobei das Substrat für einen bestimmten Zeitraum auf eine Temperatur erwärmt wird, bei der das Nitrid des magnetischen Elements dissoziiert, Stickstoff durch Diffusion freigesetzt wird und das magnetische Element zurückbleibt, und
(c) dem Abkühlenlassen des Substrats,
wobei sich das magnetische Elemente mit dem Platin zu einer Legierung verbindet und Partikel bildet, die im Wesentlichen monodispers und im Wesentlichen gleichmäßig im Siliziumnitrid verteilt sind.

2. Ein Verfahren gemäß Anspruch 1, bei dem als Nitrid eines magnetischen Elements Kobaltnitrid verwendet wird und die sich bildenden Partikel PtCo-Partikel sind.

3. Ein Verfahren gemäß Anspruch 2, bei dem das Substrat bei der schnellen thermischen Bearbeitung für einen Zeitraum von 30 bis 60 Sekunden von der Umgebungstemperatur auf mehr als 500 °C erwärmt wird.

4. Ein Verfahren gemäß Anspruch 2 oder Anspruch 3, bei dem die in Schritt (b) erreichte Temperatur sicherstellt, dass die Bildung von PtCo-Partikeln in tetragonaler Kristallform erfolgt.

5. Ein Verfahren gemäß Anspruch 4, bei dem das Substrat bei der schnellen thermischen Bearbeitung für einen Zeitraum von 30 bis 60 Sekunden von der Umgebungstemperatur auf 600 bis 650 °C erwärmt wird.

6. Ein Verfahren zum Herstellen eines vertikal durch Wärmeeinwirkung beschreibbaren magnetischen Mediums, bestehend aus einem Verfahren zum Herstellen eines nanopartikulären Mediums gemäß jedem der vorangehenden Ansprüche, das darüber hinaus den Schritt des Erzeugens einer äußeren Schutzschicht beinhaltet.

7. Ein Verfahren gemäß Anspruch 6, bei dem die äußere Schutzschicht eine Schicht aus Siliciumnitrid ist, die erzeugt wird, indem das Aufstäuben des Siliciumnitrids in Schritt (a) fortgesetzt wird, nachdem das Aufstäuben des Platins und des Kobaltnitrids beendet wurde.

8. Ein Verfahren gemäß Anspruch 7, bei dem das besagte fortgesetzte Aufstäuben ausreicht, eine Schutzschicht mit einer ungefähren Dicke zwischen 5 nm und 10 nm zu erzeugen.

9. Eine katalytische Vorrichtung, bei der der Katalysator ein nanopartikuläres PtCo-Medium umfasst, das entsprechend einem Verfahren gemäß einem der Ansprüche 2 bis 5 hergestellt wurde.

## Revendications

1. Procédé pour fabriquer un support nanoparticulaire, mettant en jeu les étapes suivantes :
(a) pulvériser sur un substrat du platine, du nitrure de silicium et un nitrure d'un élément magnétique qui se dissociera sous traitement thermique dans un vide, la pulvérisation étant de nature à produire des quantités relatives prédéterminées du platine, du nitrure de silicium et du nitrure d'un élément magnétique ;
(b) exposer le substrat ainsi traité à une opération de traitement thermique rapide dans un vide, dans le cadre de laquelle la température du substrat est élevée, sur une période donnée, à un niveau auquel le nitrure de l'élément magnétique se dissocie, ce qui dégage l'azote par diffusion et laisse l'élément magnétique en place, et
(c) laisser le substrat refroidir,
faisant que l'élément magnétique s'allie au platine pour former des particules qui sont sensiblement monodispersées et réparties de façon sensiblement uniforme dans le nitrure de silicium.

2. Procédé tel que revendiqué à la revendication 1, dans le cadre duquel du nitrure de cobalt est utilisé pour le nitrure d'un élément magnétique, et les particules formées sont des particules de PtCo.

3. Procédé tel que revendiqué à la revendication 2, dans le cadre duquel l'opération de traitement thermique rapide chauffe le substrat de la température ambiante à > 500°C sur une période comprise entre 30 et 60 secondes.

4. Procédé tel que revendiqué à la revendication 2 ou à la revendication 3, dans le cadre duquel la température atteinte pendant l'étape (b) est de nature à permettre la formation de particules de PtCo de forme cristalline tétragonale.

5. Procédé tel que revendiqué à la revendication 4, dans le cadre duquel l'opération de traitement thermique rapide chauffe le substrat de la température ambiante à entre 600 et 650°C sur une période comprise entre 30 et 60 secondes.

6. Procédé pour fabriquer un support magnétique enregistrable assisté par chaleur perpendiculaire, comportant un procédé pour fabriquer un support nanoparticulaire tel que revendiqué dans l'une quelconque des revendications précédentes et comportant en outre l'étape qui consiste à fournir une couche protectrice externe.

7. Procédé tel que revendiqué à la revendication 6, dans le cadre duquel la couche protectrice externe est une couche de nitrure de silicium produite en permettant à la pulvérisation du nitrure de silicium à l'étape (a) de continuer après que la pulvérisation du platine et du nitrure de cobalt a cessé.

8. Procédé tel que revendiqué à la revendication 7, dans le cadre duquel ladite pulvérisation continuée est suffisante pour produire une couche protectrice dont l'épaisseur est comprise entre 5 nm et 10 nm environ.

9. Appareil catalytique, dans le cadre duquel le catalyseur comporte un support nanoparticulaire en PtCo, réalisé conformément à un procédé tel que revendiqué dans l'une quelconque des revendications 2 à 5.
